(19) Europäisches Patentamt / European Patent Office / Office européen des brevets

(11) **EP 1 780 524 A2**

(12) **EUROPÄISCHE PATENTANMELDUNG**

(43) Veröffentlichungstag:
**02.05.2007 Patentblatt 2007/18**

(51) Int Cl.:
**G01L 5/16** *(2006.01)* **G01L 5/20** *(2006.01)*
**G01M 17/10** *(2006.01)*

(21) Anmeldenummer: **06019634.2**

(22) Anmeldetag: **20.09.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **26.10.2005 DE 102005051498**

(71) Anmelder: **Deutsche Bahn AG**
**10785 Berlin (DE)**

(72) Erfinder:
• **Schwabe, Olaf**
  **32457 Porta-Westfalica Kleinenbremen (DE)**
• **Berg, Hermann**
  **32257 Bünde (DE)**

(74) Vertreter: **Zinken-Sommer, Rainer**
**Deutsche Bahn AG**
**Patentabteilung**
**Völckerstrasse 5**
**80939 München (DE)**

(54) **Messradsatz für Schienenfahrzeuge**

(57) Die Erfindung betrifft einen Messradsatz für Schienenfahrzeuge mit auf den Radscheiben im Abstand verschiedener Radien angeordneten Messfühlern, insbesondere Dehnungsmessstreifen, zur Erfassung von während der Fahrt auftretenden Kräften.

Im Stand der Technik sind je Radius acht Messfühler (R1 bis R8) angeordnet, wobei vier Messfühler (R1, R4, R5, R8) auf der Radscheibeninnenseite und vier Messfühler (R2, R3, R6, R7) auf der Radscheibenaußenseite liegen.

Erfindungsgemäß sind acht weitere Messfühler auf der Radscheibe angebracht, die jeweils 45° versetzt zu den bisherigen Messfühlern appliziert sind und zu zwei weiteren Wheatstoneschen Messbrücken zusammengefasst sind.

**Figur**

**Beschreibung**

Die Erfindung betrifft einen Messradsatz für Schienenfahrzeuge mit auf den Radscheiben im Abstand verschiedener Radien angeordneten Messfühlern, insbesondere Dehnungsmessstreifen, zur Erfassung von während der Fahrt auftretenden Kräften.

Aus kommerziellen Gründen nehmen Geschwindigkeiten und Achslasten im Schienenverkehr zu. Dabei ist es aus verschiedenen Gründen unbedingt notwendig, die daraus entstehenden Auswirkungen sowohl auf das Fahrzeug als auch auf den Oberbau zu kennen. Von maßgeblicher Bedeutung sind die zwischen Rad und Schiene auftretenden Kräfte.

Aus DE 42 18 929 C1 ist ein Messradsatz zur Ermittlung der zwischen Rad und Schiene auftretenden Kräfte bekannt, bei dem je Radius acht Messfühler angeordnet sind, wobei vier Messfühler auf der Radscheibeninnenseite und vier Messfühler auf der Radscheibenaußenseite liegen. Hierbei sind mindestens zwei Messradien pro Radscheibe vorhanden. Zur Messwertbestimmung sind acht Messfühler (R1 bis R8) eines Messradius zu zwei Wheatstoneschen Messbrücken zusammengeschaltet, wobei zwei Messfühler auf der Radscheibeninnenseite und zwei Messfühler auf der Radscheibenaußenseite zusammengehören. Als Messfühler werden insbesondere Dehnungsmessstreifen (DMS) verwendet, die auf die Radscheibe aufgeklebt werden.

Hierdurch werden die horizontalen Kräfte zwischen Rad und Schiene ohne Einfluss des Radaufstandspunktes gemessen, so dass eindeutige Angaben zur Entgleisungssicherheit und zur Gleisbeanspruchung möglich sind.

Nachteile dieser Lösung sind jedoch insbesondere:

- Bei Hohlwellenantrieben kann die Wellengleichung nicht zur Berechnung der Kraft in y-Richtung, der sog. Y-Kraft, herangezogen werden, da der Antrieb direkt in die Scheibe eingreift und das Antriebsmoment das Ergebnis verfälschen würde. Die y-Richtung ist hierbei die quer zur Fahrtrichtung des Zuges liegende horizontalen Richtung.

- Bei Rädern mit kleinem Durchmesser (z.B. Rollende Landstraße) hat auch die Änderung des Durchmessers, insbesondere durch betriebsbedingte Abnutzung der Radlauffläche, Einfluss auf die Berechnung. Dies kann mit den Verfahren des Standes der Technik nicht berücksichtigt werden.

- In bestimmten Fällen ist es nicht möglich DMS auf der Welle gemäß dem Verfahren des Aufsatzes "Ermittlung der Kräfte zwischen Rad und Schiene aus der Biegedehnung der Radsatzwelle" in ZEV Glasers Annalen, Heft 12 aus 1972, Seite 373 - 385, zu applizieren, z.B. bei zu kurzem Notschenkel oder Belegung der Innenseite der Welle durch Getriebe.

- Wird der Radsatz angetrieben oder bebremst und soll während dieser Phase gemessen werden, so sind weitere Informationen nötig, die durch die zusätzlichen Messstellen geliefert werden.

Es ist somit Aufgabe der Erfindung, ein Verfahren bereitzustellen, mit dem gegenüber dem Stand der Technik sowohl eine Erweiterung der Einsatzmöglichkeiten als auch eine Erhöhung der Genauigkeit möglich ist.

Diese Aufgabe wird in Verbindung mit dem Oberbegriff des Anspruches 1 erfindungsgemäß durch die in Anspruch 1 angegebenen Merkmale gelöst.

Ansprüche 2 bis 4 beinhalten vorteilhafte Ausführungsbeispiele der erfindungsgemäßen Lösung aus Anspruch 1.

Da es sich bei dem Spannungsverlauf über 360° auf der Scheibe um eine nichtlineare Funktion handelt, wird durch mathematische Verknüpfungen aus den Additionstheoremen eine neue zusätzliche Gleichung ermittelt, die mit der doppelten Raddrehfrequenz rotiert und von der einfach umlaufenden Gleichung linear unabhängig ist. Auch in dieser neuen Gleichung lassen sich die tangentialen (Tx)-Kräfte mathematisch eliminieren oder berechnen.

Erfindungsgemäß sind acht weitere Messfühler, insbesondere in Form von DMS, auf die Radscheibe aufgebracht, die jeweils 45° versetzt zu den Hauptebenen appliziert sind. Diese sind zu zwei weiteren Wheatstoneschen Messbrücken zusammengefasst.

Bei Hohlwellenantrieben kann die Wellengleichung des Verfahrens des Aufsatzes "Ermittlung der Kräfte zwischen Rad und Schiene aus der Biegedehnung der Radsatzwelle" in ZEV Glasers Annalen, Heft 12 aus 1972, Seite 373 - 385, nicht zur Berechnung der Y-Kraft, herangezogen werden. Erfindungsgemäß erhält man aus einem Messradius aber zwei voneinander unabhängige Informationen bzw. Gleichungen:

$$Ys1 = k1 \cdot Y1 + k2 \cdot Y1 \cdot a + k3 \cdot Q1 + k4 \cdot Q1 \cdot a + k5 \cdot \Delta Y_{ba} + k6 \cdot \Delta Y_{ba} \cdot a$$

$$Ys11 = k7 \cdot Y1 + k8 \cdot Y1 \cdot a + k9 \cdot Q1 + k10 \cdot Q1 \cdot a + k11 \cdot \Delta Y_{ba} + k12 \cdot \Delta Y_{ba} \cdot a$$

Die Empfindlichkeit der Scheibenmessstellen Ys1 und Ys11 wird durch die vertikalen Q1 und lateralen Y1 Kräfte beeinflusst zusätzlich spielt hier noch der veränderte Hebelarm durch die Änderung des Radaufstandspunktes $\Delta Y_{ba}$ eine Rolle. Die unterschiedliche Gewichtung der einzelnen Einflüsse wird durch die Faktoren k1 bis k12 berücksichtigt. Diese Faktoren werden durch eine Kalibrierung bestimmt. In dieser Kalibrierung werden definierte Kräfte aus definierten Richtungen in den Radsatz eingeleitet.

Bei Rädern mit kleinen Durchmessern spielt auch die Änderung $\Delta Y_r$ des Durchmessers des Rades eine nicht zu vernachlässigende Rolle. Auch in diesem Fall ist eine weitere Information notwendig, um das Gleichungssystem zu lösen. Hierbei wird erfindungsgemäß zusätzlich die Wellengleichung mit herangezogen:

$$Ys1 = k1 \cdot Y1 + k2 \cdot Y1 \cdot a + k3 \cdot Q1 + k4 \cdot Q1 \cdot a + k5 \cdot \Delta Y1_{ba} + k6 \cdot \Delta Y1_{ba} \cdot a + k7 \cdot \Delta Y1_r + k8 \cdot \Delta Y1_r \cdot a$$

$$Ys11 = k7 \cdot Y1 + k8 \cdot Y1 \cdot a + k9 \cdot Q1 + k10 \cdot Q1 \cdot a + k11 \cdot \Delta Y1_{ba} + k12 \cdot \Delta Y1_{ba} \cdot a + k13 \cdot \Delta Y1_r + k14 \cdot \Delta Y1_r \cdot a$$

$$Yw1 = Y1 + \Delta Y1_{ba} - \Delta Y1_r$$

Die Faktoren $k1 ... k14$ ergeben sich aus der Kalibrierung der Scheibe. Der Faktor $\alpha$ wird aus der 8-fachen Raddrehung gebildet und eliminiert die Restwelligkeit des Signals in den Ebenen zwischen den Messstellen. Diese sog. Restwelligkeit wird dadurch hervorgerufen, dass bedingt durch die Form der Radscheibe das Signal einer auf dem Rad geklebten Messbrücke nicht exakt einem Sinus folgt, wie dies z.B. bei einem idealen Zylinder der Fall wäre.

In Fällen, in denen es nicht möglich ist, DMS auf der Welle zu applizieren, dem sog. "nur Scheibe Verfahren", werden je nach Anwendung 2-4 Radien mit je 4 Wheatstoneschen Messbrücken nur auf der Scheibe appliziert. Hierfür ist eine radial gewellte Scheibe erforderlich. Im Folgenden wird beispielhaft eine Radscheibe mit drei Radien betrachtet.

Sollen alle Unbekannte in einem Gleichungssystem erfasst werden, sind weitere Gleichungen notwendig. Aus den drei mit DMS bestückten Radien r1, r2 und r3 lassen sich die Empfindlichkeiten Ys1, Ys2 und Ys3 der Messbrücken bestimmen. Diese lassen sich wie folgt errechnen:

$$Ys1 = k1 \cdot Y1 + k2 \cdot Y1 \cdot a + k3 \cdot Q1 + k4 \cdot Q1 \cdot a + k5 \cdot \Delta Y1_{ba} + k6 \cdot \Delta Y1_{ba} \cdot a + k7 \cdot \Delta Y1_r + k8 \cdot \Delta Y1_r \cdot a$$

$$Ys2 = k9 \cdot Y1 + k10 \cdot Y1 \cdot a + k11 \cdot Q1 + k12 \cdot Q1 \cdot a + k13 \cdot \Delta Y1_{ba} + k14 \cdot \Delta Y1_{ba} \cdot a + k15 \cdot \Delta Y1_r + k16 \cdot \Delta Y1_r \cdot a$$

$$Ys3 = k17 \cdot Y1 + k18 \cdot Y1 \cdot a + k19 \cdot Q1 + k20 \cdot Q1 \cdot a + k21 \cdot \Delta Y1_{ba} + k22 \cdot \Delta Y1_{ba} \cdot a + k23 \cdot \Delta Y1_r + k24 \cdot \Delta Y_r \cdot a$$

Durch das drehen des Koordinatensystems um 45° in Bezug auf die Hauptebenen, s. Fig., lassen sich für jeden Radius neue, von den aus dem ursprünglichen Koordinatensystem ermittelten Empfindlichkeiten Ys1, Ys2 und Ys3 unabhängige Empfindlichkeiten Ys11, Ys12 und Ys13 bestimmen. Die neuen Gleichungen lassen sich wie folgt darstellen:

$$Ysl1 = k25 \cdot Y1 + k26 \cdot Y1 \cdot a + k27 \cdot Q1 + k28 \cdot Q1 \cdot a + k29 \cdot \Delta Y1_{ba} + k30 \cdot \Delta Y1_{ba} \cdot a + k31 \cdot \Delta Y1_r + k32 \cdot \Delta Y1_r \cdot a$$

$$Ysl2 = k33 \cdot Y1 + k34 \cdot Y1 \cdot a + k35 \cdot Q1 + k36 \cdot Q1 \cdot a + k37 \cdot \Delta Y1_{ba} + k38 \cdot \Delta Y1_{ba} \cdot a + k39 \cdot \Delta Y1_r + k40 \cdot \Delta Y1_r \cdot a$$

$$Ysl3 = k41 \cdot Y1 + k42 \cdot Y1 \cdot a + k43 \cdot Q1 + k44 \cdot Q1 \cdot a + k45 \cdot \Delta Y1_{ba} + k46 \cdot \Delta Y1_{ba} \cdot a + k47 \cdot \Delta Y1_r + k48 \cdot \Delta Y1_r \cdot a$$

Die Faktoren $k1...k48$ ergeben sich aus der Kalibrierung der Scheibe.

Aus diesen sechs Gleichungen lassen sich jetzt die Unbekannten eliminieren:

$$Y1 = A1 \cdot Ys1 + A2 \cdot Ys2 + A3 \cdot Ys3 + A4 \cdot Ysl1 + A5 \cdot Ysl2 + A6 \cdot Ysl3$$

$$Q1 = B1 \cdot Ys1 + B2 \cdot Ys2 + B3 \cdot Ys3 + B4 \cdot Ysl1 + B5 \cdot Ysl2 + B6 \cdot Ysl3$$

Vorteil des erfindungsgemäßen Verfahrens ist, dass die fehlenden, für die Lösung des Gleichungssystems aber unverzichtbaren Gleichungen erstellt und hierfür erforderliche zusätzliche Informationen bereitgestellt werden. Desweiteren lassen sich jetzt auch an Radsätzen Kräfte bestimmen, an denen es vorher aufgrund besonderer Randbedingungen nicht möglich war.

Weiterer Vorteil ist, dass durch die zusätzlichen Messstellen eine genauere Erfassung des Radsatzes erfolgt, wodurch sich auch die Restwelligkeit unter 22,5° weitgehend eliminieren lässt.

Die Erfindung wird nachstehend anhand eines Ausführungsbeispiels und einer Zeichnung mit einer Figuren näher erläutert. Die Fig. zeigt schematisch ein radial gewelltes Rad mit 3 jeweils unter 45° DMS-bestückter Radien.

Ein erstes besonders vorteilhaftes Ausführungsbeispiel betrifft gemäß Fig. ein Messradsatz, bei dem auf ein radial gewelltes Rad 48 DMS aufgebracht sind, die zu 12 Wheatstoneschen Messbrücken verschaltet sind.

Aus den aus der Kalibrierung ermittelten 6 Gleichungen lässt sich folgendes Gleichungssystem ermitteln:

$$Ys1 = -4{,}220 \cdot Y1 + 0{,}001 \cdot Y1 \cdot a - 0{,}326 \cdot Q1 + 0{,}007 \cdot Q1 \cdot a - 4{,}631 \cdot \Delta Y1_{ba} - 0{,}046 \cdot \Delta Y1_{ba} \cdot a$$

$$Ys2 = -0{,}772 \cdot Y1 + 0{,}001 \cdot Y1 \cdot a + 0{,}602 \cdot Q1 - 0{,}039 \cdot Q1 \cdot a - 0{,}684 \cdot \Delta Y1_{ba} - 0{,}104 \cdot \Delta Y1_{ba} \cdot a$$

$$Ys3 = 2{,}623 \cdot Y1 + 0{,}044 \cdot Y1 \cdot a - 0{,}494 \cdot Q1 + 0{,}006 \cdot Q1 \cdot a - 0{,}063 \cdot \Delta Y1_{ba} + 1{,}321 \cdot \Delta Y1_{ba} \cdot a$$

$$Ysl1 = -2{,}096 \cdot Y1 - 0{,}003 \cdot Y1 \cdot a - 0{,}124 \cdot Q1 - 0{,}008 \cdot Q1 \cdot a - 2{,}255 \cdot \Delta Y1_{ba} - 0{,}043 \cdot \Delta Y1_{ba} \cdot a$$

$$Ysl2 = -0{,}352 \cdot Y1 - 0{,}003 \cdot Y1 \cdot a + 0{,}212 \cdot Q1 + 0{,}023 \cdot Q1 \cdot a - 0{,}444 \cdot \Delta Y1_{ba} + 0{,}051 \cdot \Delta Y1_{ba} \cdot a$$

$$Ys13 = 1,400 \cdot Y1 - 0,018 \cdot Y1 \cdot a - 0,217 \cdot Q1 - 0,002 \cdot Q1 \cdot a + 1,191 \cdot \Delta Y1_{ba} - 0,191 \cdot \Delta Y1_{ba} \cdot a$$

hieraus folgt:

$$Y1 = 2,004 \cdot Ys1 + 1,001 \cdot Ys2 + 0,219 \cdot Ys3 - 3,720 \cdot Ys11 - 0,073 \cdot Ys12 + 1,309 \cdot Ys13$$

$$Q1 = 0,159 \cdot Ys1 + 1,068 \cdot Ys2 + 0,011 \cdot Ys3 - 0,914 \cdot Ys11 + 1,467 \cdot Ys12 + 0,049 \cdot Ys13$$

Bezugszeichenliste

| Y1 | Führungskraft |
|---|---|
| Q1 | Radaufstandskraft |
| Tx | Tangentialkraft |
| $\Delta Y_{ba}$ | Fehler in der Führungskraft durch Änderung des Radaufstandpunktes |
| $\Delta Y_r$ | Fehler in der Führungskraft durch Änderung des Laufkreisdurchmessers |
| k1-k48 | Faktoren (werden aus der Kalibrierung ermittelt) |
| Ys1, Ys2, Ys3 | Empfindlichkeit der Wheatstoneschen Brückenschaltung unter 0° und 90° auf den verschiedenen Messradien |
| Ys11, Ys12, Ys13 | Empfindlichkeit der Wheatstoneschen Brückenschaltung unter 45° und 135° auf den verschiedenen Messradien |
| Yw1 | Empfindlichkeit der Wheatstoneschen Brückenschaltungen auf der Welle |

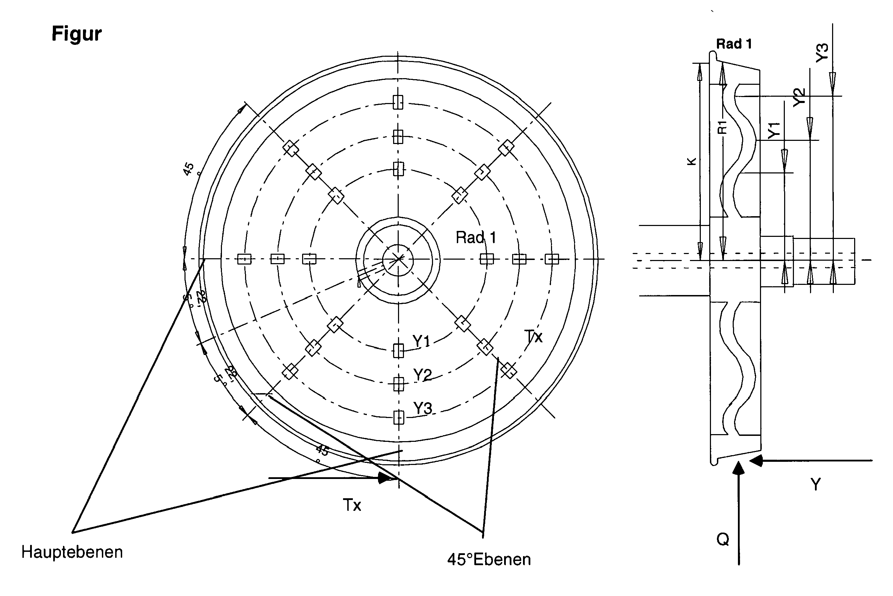

**Patentansprüche**

1. Messradsatz für Schienenfahrzeuge mit auf den Radscheiben im Abstand verschiedener Radien angeordneten Messfühlern, insbesondere Dehnungsmessstreifen zur Erfassung von im Fahrbetrieb auftretenden Kräften, wobei je Radius acht Messfühler (R1 bis R8) angeordnet sind und vier Messfühler (R1, R4, R5, R8) auf der Radscheibeninnenseite und vier Messfühler (R2, R3, R6, R7) auf der Radscheibenaußenseite liegen, **dadurch gekennzeichnet, dass** acht weitere Messfühler auf der Radscheibe angebracht sind, die jeweils 45° versetzt zu den bisherigen Messfühlern appliziert sind und zu zwei weiteren Wheatstoneschen Messbrücken zusammengefasst sind.

2. Messradsatz für Schienenfahrzeuge nach Anspruch 1, **dadurch gekennzeichnet, dass** je nach Anforderung bzw. Bauart des Radsatzes auf mindestens einem und bis zu vier Radien Messfühler auf der Radscheibe appliziert sind, diese zwei unterschiedlichen Koordinatensystemen zugeordnet sind, und pro Radius zwei linear unabhängige Gleichungen zur Bestimmung der Kräfte ermittelbar sind.

3. Messradsatz für Schienenfahrzeuge nach mindestens einem der Ansprüche 1 bis 2, **dadurch gekennzeichnet, dass** an acht Messquerschnitten auf der Radsatzwelle je acht Messfühler durch die an sich bekannte Messmethode Radsatzwellenverfahren angeordnet sind und mit der Scheibenmethode kombiniert sind.

4. Messradsatz für Schienenfahrzeuge nach mindestens einem der Ansprüche 1 bis 3, **dadurch gekennzeichnet,**

**dass** durch die erhöhte Anzahl der Gleichungen unbekannte Größen wie z. B. die Änderung des Radiuses des Laufrades oder Momenteneinflüsse eliminierbar sind.

**Figur**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4218929 C1

**In der Beschreibung aufgeführte Nicht-Patentliteratur**

- Ermittlung der Kräfte zwischen Rad und Schiene aus der Biegedehnung der Radsatzwelle. *ZEV Glasers Annalen,* 1972, 373-385